# EUROPEAN PATENT APPLICATION

(11) **EP 3 322 186 A1**
(43) Date of publication of application: **16.05.2018**
(21) Application number: 16306486.8
(22) Date of filing: 14.11.2016
(51) Int. Cl.: H04N 21/218, G06F 3/01, H04N 13/04, H04N 21/442, H04N 21/6587, H04N 21/81, G02B 27/01

(54) **METHOD AND DEVICE FOR TRANSMITTING DATA REPRESENTATIVE OF AN IMAGE**

(71) Applicant: Thomson Licensing, 92130 Issy-les-Moulineaux (FR)
(72) Inventor: DANIEAU, Fabien, 35576 Cesson Sévigné Cedex (FR); LEROY, Bertrand, 35576 Cesson Sévigné Cedex (FR); ORLAC, Izabela, 35576 Cesson Sévigné Cedex (FR)
(74) Representative: Merlet, Hugues

(57) **Abstract**

A method of and device configured for transmitting data representative of an image, the method comprising: obtaining a first parameter representative of a visualisation direction associated with a first image representative of a first part of a scene, the first image corresponding to a first part of a large field-of-view content; updating a body model by applying the first parameter to the body model; comparing at least a second parameter of the updated body model to at least a reference value to determine a first level of visualisation comfort; and transmitting data representative of a second image when the first level of visualisation comfort is less than a determined level, the second image being representative of a second part of the scene, the second part of the scene being different from the first part of the scene.

## Description

### 1. Technical field

The present disclosure relates to the domain of immersive video content. The present disclosure is also understood in the context of the automatic selection of point of view for immersive content, for example for the transmitting/rendering of images associated with the selected point of view to/on end-user devices such as mobile devices or Head-Mounted Displays

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Recently there has been a growth of available large field-of-view content (up to 360°). Such content is potentially n ot fully visible by a user watching the content on immersive display devices such as Head Mounted Displays (HMD), CAVE system or the like. That means that at a given moment, a user may only be viewing a part of the content. However, a user can typically navigate within the content by various means such as head movements. This may lead to uncomfortable positions which may cause musculo-skeletal fatigue.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of transmitting data representative of an image, the method comprising:
- obtaining a first parameter representative of a visualisation direction associated with a first image representative of a first part of a scene, the first image corresponding to a first part of a large field-of-view content;
- updating a body model by applying the first parameter to the body model;
- comparing at least a second parameter of the updated body model to at least a reference value to determine a first level of visualisation comfort; and
- transmitting data representative of a second image when the first level of visualisation comfort is less than a determined level, the second image being representative of a second part of the scene, the second part of the scene being different from the first part of the scene.

The present disclosure also relates to a device configured to transmit data representative of an image, the device comprising a memory associated with at least one processor configured to:
- obtain a first parameter representative of a visualisation direction associated with a first image representative of a first part of a scene, the first image corresponding to a first part of a large field-of-view content;
- update a body model by applying the first parameter to the body model;
- compare at least a second parameter of the updated body model to at least a reference value to determine a first level of visualisation comfort; and
- transmit data representative of a second image when the first level of visualisation comfort is less than a determined level, the second image being representative of a second part of the scene, the second part of the scene being different from the first part of the scene.

The present disclosure also relates to a device configured to transmit data representative of an image, the device comprising:
- means for obtaining a first parameter representative of a visualisation direction associated with a first image representative of a first part of a scene, the first image corresponding to a first part of a large field-of-view content;
- means for updating a body model by applying the first parameter to the body model;
- means for comparing at least a second parameter of the updated body model to at least a reference value to determine a first level of visualisation comfort; and
- means for transmitting data representative of a second image when the first level of visualisation comfort is less than a determined level, the second image being representative of a second part of the scene, the second part of the scene being different from the first part of the scene.

According to a particular characteristic, the second image corresponds to a second part of the large field-of-view content, the second part of the large field-of-view video content being different from the first part of the large field-of-view video content.

According to another characteristic, the second image is obtained from a video content different from the first large field-of-view content.

According to a specific characteristic, the large field-of-view content is obtained from a first acquisition device having a first location in the scene, the video content is obtained from a second acquisition device having a second location in the scene, the first location and the second location being different.

According to a particular characteristic, the video content is selected from a plurality of video contents, the selection being made according to at least one of the following information:
- position of a point of interest in the scene;
- a level of visualisation comfort associated with each video content.

According to another characteristic, a second level of visualisation comfort is further determined for a visualisation direction associated with the second image before transmitting the data representative of the second image, the data being transmitted when the second level of visualisation comfort is greater than the determined level.

According to a particular characteristic, the second image is displayed on a display screen.

The present disclosure also relates to a computer program product comprising program code instructions to execute the steps of the abovementioned method, when this program is executed on a computer.

The present disclosure also relates to a (non-transitory) processor readable medium having stored therein instructions for causing a processor to perform at least the abovementioned method.

### 4. List of figures

The present principles will be better understood, and other specific features and advantages will emerge upon reading the following description, the description making reference to the annexed drawings wherein:
- figures 1A and 1B show an immersive content, according to a particular embodiment of the present principles;
- figures 2A and 2B each shows an example of a body model associated with a user watching the immersive content of figures 1A and 1B, according to a particular embodiment of the present principles;
- figure 3 shows a process of automatic selection of a point of view when watching the immersive content of figures 1A and 1B, according to a particular embodiment of the present principles;
- figure 4 shows the structure of an apparatus adapted to display the immersive content of figures 1A and 1B, in accordance with an example of the present principles;
- figure 5 shows the structure of an apparatus adapted to implement the process of figure 3 and/or the method of figure 7, in accordance with an example of the present principles;
- figures 6A to 6C show the implementation of the process of figure 3 in a specific environment, in accordance with an example of the present principles;
- figure 7 shows a method for transmitting data representative of an image, according to a particular embodiments of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of transmitting data representative of an image, e.g. values for each color component (e.g. Red, Green and Blue) of each pixel of the image. The present principles will also be described in reference to a particular embodiment of an apparatus configured to implement the method of transmitting the data representative of an image. The method comprises the obtaining of one or more first parameters that are associated with the direction of visualisation of a first image. The first image corresponds to a part of a large field-of-view content and represents a first part of a scene. The one or more parameters may for example be obtained from a display device adapted to watch large field-of-view content, e.g. a HMD. The one or more first parameters are applied to a body model that represents the body, or part of the body, of a person watching the first image, one or more second parameters of the body model being updated via the applying of the one or more first parameters. The one or more second parameters are compared with one or more reference values to determine whether the visualisation direction associated with the first image may be considered as comfortable or not, a first level of visualisation comfort being determined from the comparison. If the visualisation direction is considered as not comfortable (i.e. when the first level of visualisation comfort is less than a determined level), data representative of a second image is transmitted (e.g. to the display device used to display the first image), the second image being representative of a second part of the scene different from the first part of the scene associated with the first image. In other words, the second point of view of the scene associated with the second image is different from the first point of view of the scene associated with the first image.

A large field-of-view content may be, among others, an immersive video representing a real scene for example, a three-dimension computer graphic imagery scene (3D CGI scene), a point cloud. Many terms might be used to design such immersive videos: Virtual Reality (VR), 360, panoramic, 4π steradians, immersive, omnidirectional or large field of view for example.

The determination of a visualization comfort level associated with a current visualization direction of a part of a large field-of-view content enables to prevent potential muscular fatigue or potential musculo-skeletal disorders by automatically selecting and proposing another more comfortable point of view of the scene.

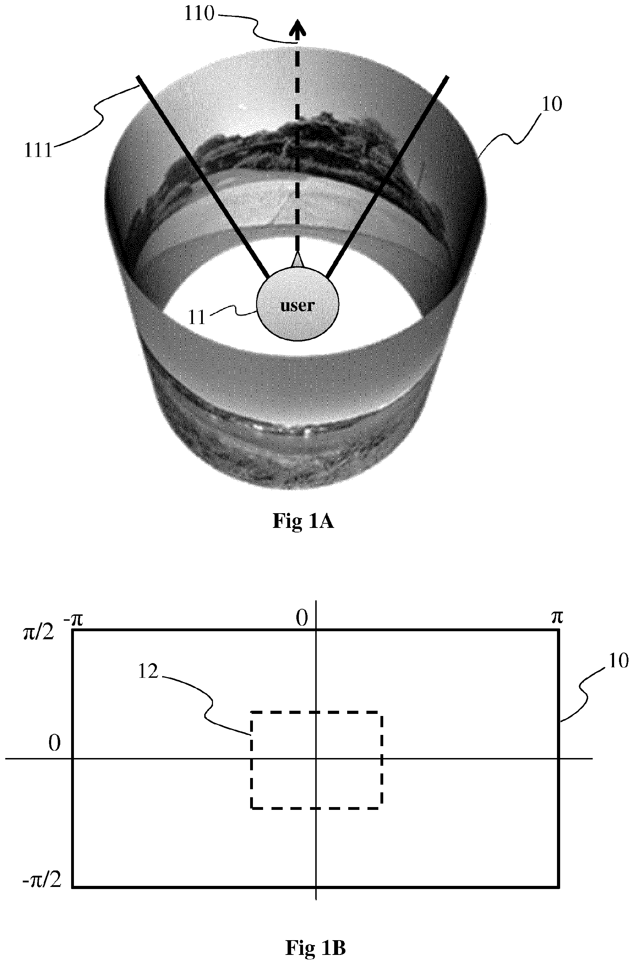

**Figures 1A and 1B** show a user 11 immersed in a large field-of-view video content 10, e.g. a 4π steradian video content (or spherical video content), also called immersive content, according to a particular and non-limitative embodiment of the present principles.

**Figure 1A** illustrates a 3D representation example of the large field-of-view content. The large field-of-view content 10 corresponds for example to a real scene acquired with one or more cameras or to a virtual scene synthesized by using a 3D engine. According to a variant, the large field-of-view content 10 corresponds to a representation of a real scene including virtual object(s), i.e. a blending of real and virtual scenes. The large field-of-view content 10 corresponds for example to a real scene acquired with one or more cameras or to the combining / compositing of different elements of a real scene each acquired with one or more cameras. As illustrated in figure 1 A, the user 11 is watching at a part of the large field-of-view content according to a viewing direction 110, the viewing direction 110 corresponding to the main direction of the gaze of the user 11. A body model is advantageously associated with the user. A field of view 111 is associated with the viewing direction 110, the field of view 111 corresponding to a part only of the large field-of-view content 10. When the gaze direction of the user 11 changes, the part of the large field-of-view content seen by the user (and corresponding to the field of view) changes consequently. The user 11 may wander its gaze within the large field-of-view content by for example moving his/her head (or his/her body or a part of it) from left to right (or inversely) and/or from top to bottom (or inversely).

**Figure 1B** shows an example of the large field-of-view content 10, in the non-limiting exemplary form of a 4π steradian video content, according to a particular and non-limitative embodiment of the present principles. Figure 1B corresponds to a planar representation of the large field-of-view content 10. A part 12 of the large field-of-view content 10 corresponds for example to the part of the large field-of-view content displayed onto a display device adapted to visualize immersive contents, the size of the part 12 being for example equal to the field of view provided by the display device. The part displayed on the display device may be called an image in the following description.

The display device used to visualize the large field-of-view content 10 is for example a HMD (Head-Mounted Display), worn on the head of a user or as part of a helmet. The HMD advantageously comprises one or more display screens (for example LCD (Liquid Crystal Display), OLED (Organic Light-Emitting Diode) or LCOS (Liquid Crystal On Silicon)) and sensor(s) configured for measuring the change(s) of position of the HMD, for example gyroscopes or an IMU (Inertial Measurement Unit), according to one, two or three axes of the real world (pitch, yaw and/or roll axis). The part 12 of the large field-of-view content 10 corresponding to the measured position of the HMD is advantageously determined with a specific function establishing the relationship between the point of view associated with the HMD in the real world and the point of view of a virtual camera associated with the large field-of-view content 10. Controlling the part (i.e. the image) 12 of the video content to be displayed on the display screen(s) of the HMD according to the measured position of the HMD enables a user wearing the HMD to browse into the large field-of-view content, which is larger than the field of view associated with the display screen(s) of the HMD. For example, if the field of view offered by the HMD is equal to 110°(for example about the yaw axi s) and if the large field-of-view content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the large field-of-view content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors. According to another variant, the immersive system is a tablet with a tactile display screen, the user browsing into the content by moving the tablet, the displayed content changing according to the change of position of the tablet.

The large field-of-view content 1 and the part 12 as well may comprise foreground object(s) and background object(s). The background object(s) may be obtained for example from a first video representing the background of the large field-of-view content 10. The foreground object(s) may be obtained for example from one or more second videos each representing one or more of the foreground objects, the large field-of-view content being obtained by compositing of the first video with the second video(s).

Naturally, the large field-of-view content 10 is not limited to a 4π steradian video content but extends to any video content (or audio-visual content) having a size greater than the field of view 12. The large field-of-view content may be for example a 2π, 2.5 π, 3π steradian content and so on.

It is understood with a video or a video content a sequence of successive still images, the sequence comprising one or more still image(s). The large field-of-view content consequently comprises one or more successive image(s).

An immersive video content is a content encoded on at least one rectangular image that is a two-dimension array of pixels (i.e. element of color information) like a "regular" video. To be rendered, the image is first mapped on the inner face of a convex volume, also called mapping surface (e.g. a sphere, a cube, a pyramid), and, second, a part of this volume is captured by a virtual camera. Images captured by the virtual camera are rendered on the screen of an immersive display device (e.g. a HMD).

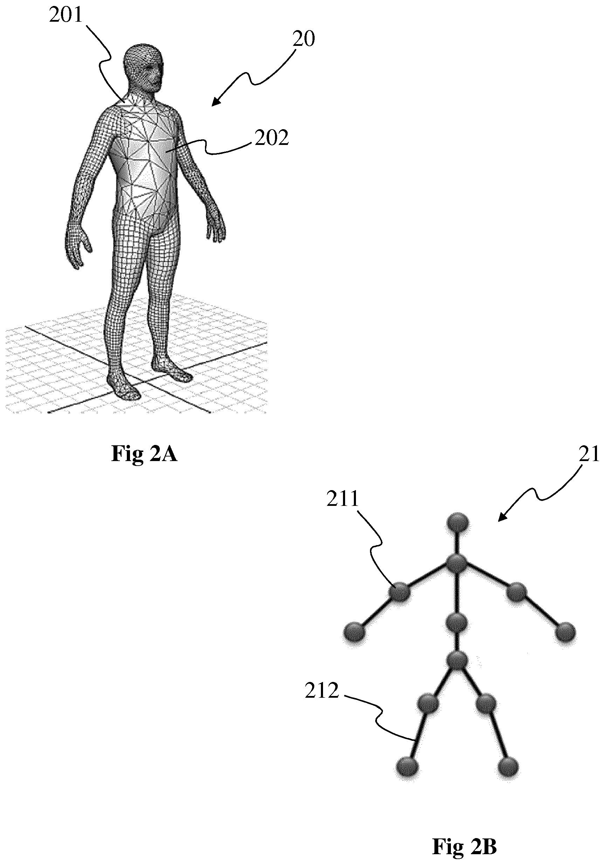

**Figures 2A and 2B** each show a body model used to determine the level of visualization comfort associated with the visualization of a part of the large field-of view content 10 according to a visualization direction. The body model is used to represent the user 11 watching at the large field-of view content 10, according to two particular and non-limitative embodiments of the present principles.

Figure 2A illustrates a first example of a body model 20 comprising a mesh of mesh elements, e.g. polygons 201, 202, called faces. Each face may be associated with an identifier. As illustrated on figure 2A, the density of the mesh elements may vary according to the part of the body model. The faces are for example denser on the hands than on the forearm, denser on the head than on the torso. According to a variant, the density of the mesh elements may be homogeneous on the whole body model.

Figure 2B illustrated a second example of a body model 21 corresponding to a simplified user's body model represented with joints 201 and segments 202. For example, arms are considered as two segments (arm and forearm) and two joints (elbow and shoulder). The neck is composed of one segment and one joint. The size of the segments and angle limits of joints are advantageously defined by anatomical data, as described for example in *"*General Anatomy and Musculoskeletal System" by M. Schuenke, E. Schulte, U. Schumacher, L. M. Ross, E. D. Lamperti and M. Voll (Thieme Medical Publishers Inc., 2010).

Naturally, the body model is not limited to the exemplary body models 20 and 21 but extends to any body model. The body model may for example comprise a more accurate representation of the human skeleton (size and weight of bones, constraints on the joints) and/or comprise a representation of the muscles. A more detailed body model will enable the computation of more realistic levels of visualization comfort.

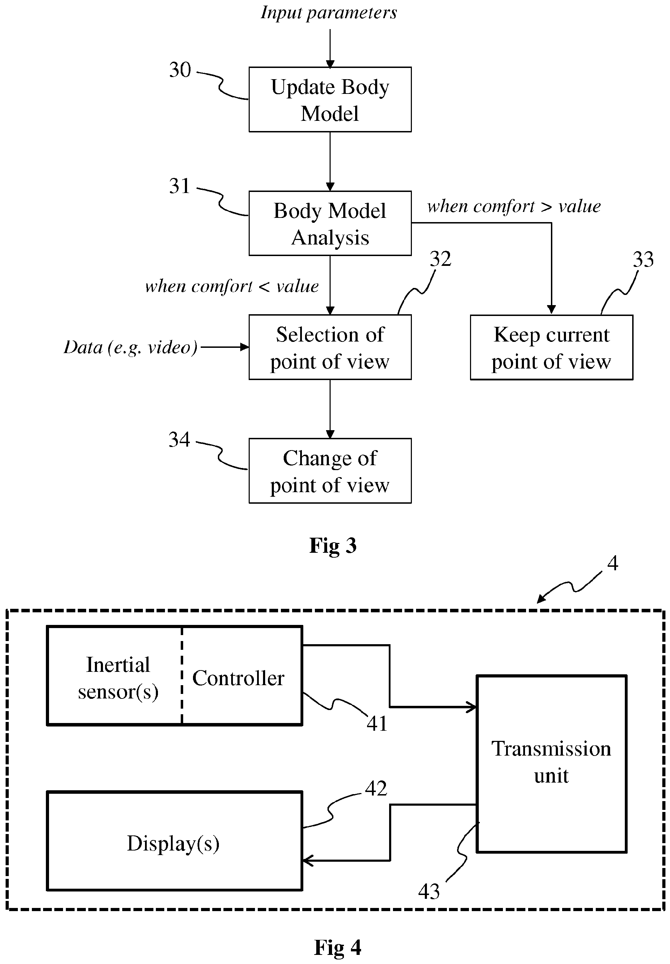

**Figure 3** shows a process of automatic selection of a point of view when watching the large field-of-view content 10, according to a particular and non-limiting embodiment of the present principles.

In a first operation 30, the body model 20, 21 is updated by applying input parameters to it. The input parameters correspond for example to one or more first parameters received from the immersive apparatus used to visualize the large field-of-view content, e.g. an HMD. The first parameters are representative of the current visualization direction associated with the part of the large field-of-view that is currently watched by the user represented with the body model 20, 21. The body model is updated to have an orientation corresponding to the orientation of the user watching a first image corresponding to the part of the large field-of-view that is currently watched by the user. For example, the visualization direction may be represented with first parameters defining the orientation of the gaze of the user, the first parameters corresponding for example to three angles ϕ, θ, ψ corresponding to the pitch, yaw and roll angles. The body model is updated to go from one current state to an updated state, the current state corresponding for example to an initial state or to a state updated during the previous updating of the body model. Depending on the type of the body model (e.g. according to the first example of figure 2A or the second example of figure 2B), part(s) of the body model is (are) updated to match the change of position/orientation of the user watching the large field-of-view content. For example, the angles of the joints of the part of the body model modelling the head of the user are updated in such a way that the part of the body model corresponding to the head may be oriented in the visualization direction.

Depending on the accuracy of the representation of the human body and skeleton by the body model, constraints on the joints and/or muscles of other parts of the body model (i.e. other than the head) induced by the change of orientation of the head may be optionally updated.

According to a variant, the first parameters may comprise parameters received from different sensors located on different parts of the body of the user, the sensors being for example adapted to measure muscle tension or motion of determined part(s) of the body. These first parameters are parameters representative of such muscle tension(s) or motion(s). The first parameters according to this variant may be received in addition to the angles described hereinbelow or may be received in place of the angles described hereinbelow.

In a second operation 31, the updated body model is analyzed to determine a level of comfort associated with the current visualization direction. To reach that aim, second parameters of the updated body model are compared with reference value(s). The second parameters depend from the type of the body model and may correspond for example to the angle values associated with the joints, constraints values associated with the joints and/or the muscle. A reference value may correspond to a limit value from which it is considered that the position held by the user is not comfortable any more. Angle limit values and/or constraint limit values of joints are for example defined by anatomical data, as described for example in "General Anatomy and Musculoskeletal System" by M. Schuenke, E. Schulte, U. Schumacher, L. M. Ross, E. D. Lamperti and M. Voll (Thieme Medical Publishers Inc., 2010). A position held by the user viewing a first image according to the current visualisation direction is considered as uncomfortable when the values of the second parameters are greater than or equal to the reference values. A position hold by the user viewing a first image according to the current visualisation direction is considered as comfortable when the values of the second parameters are less than the reference values. A level of comfort may be determined based on the result of the comparison between the second parameters and the reference values. The level of comfort may for example take two values, a first value indicating that the current visualisation direction is comfortable and a second value indicating that the current visualisation direction is not comfortable. According to a variant, the level of comfort may take more than two values, each value indicating a specific level of comfort. Values of the level of comfort may be comprised between 0 and 1, the comfortability diminishing toward 1, the current visualisation direction being considered as comfortable if less than 0.5 and as uncomfortable if greater than 0.5. According to this variant, the values of the level of comfort are for example proportional to the difference between the values of the second parameters and the reference values. A non-limiting example of reference values ϕᵣ, θᵣ, ψᵣ when considering the example of angle values only may be ϕᵣ=±10°, θᵣ=±10° and ψᵣ = ±5°, assuming that the most comfortable visualiza tion direction is obtained when the head is aligned to the coronal plane (the user is looking in front of him) and the orientation of the immersive device displaying the first image (e.g. the HMD) is zero (pitch, yaw and roll equal 0). In the example of an immersive device corresponding to a HMD, the angles given by the HMD correspond to the orientation of the head of the user.

When the level of visualization comfort is greater than a determined level, i.e. the visualization direction is considered comfortable, the current point of view associated with the current large field-of-view content is kept in an operation 33. This means that the user is still able to browse into the current large field-of-view content.

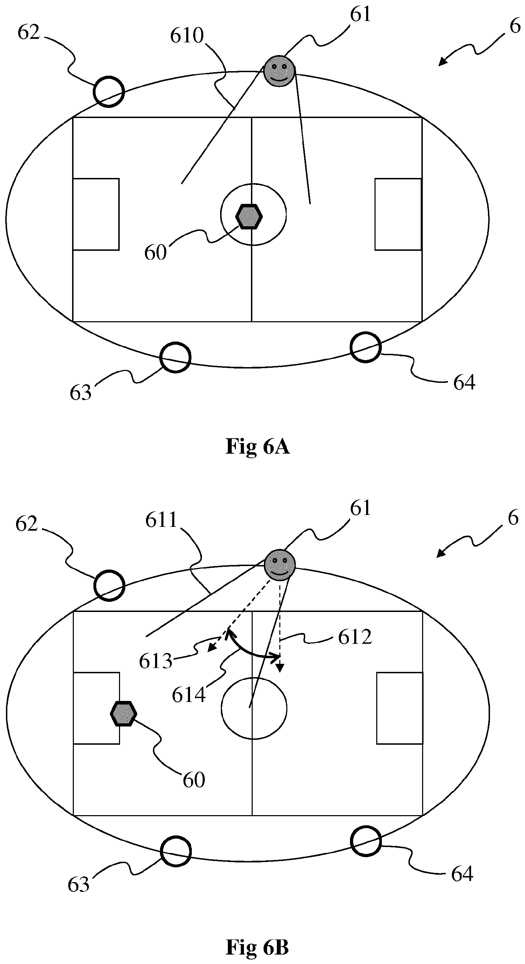

When the level of visualization comfort is less than a determined level, i.e. the visualization direction is considered uncomfortable, a new point of view different from the current point of view associated with the current large field-of-view content watched by the user is selected in an operation 32. The new point of view is for example selected from a list of different video contents, each representative of the same scene (or part of the same scene) according to different points of view. Such an example is described with more details with regard to figures 6A to 6C. According to another example, the point of view associated with the first image displayed on the immersive device and associated with the current visualization direction considered uncomfortable is changed while displaying the same first image. This is for example obtained by "moving" the part of the large field-of-view content currently displayed (i.e. the first image) in such a way that this part is watched according to a visualization direction having angle values (pitch, yaw and raw) equal to 0 for example. According to this example, the reference part of the large field-of-view is changed to correspond to the part of the large field-of-view currently watched by the user.

In an operation 34, the point of view associated with the part of the scene watched by the user is changed to display the second image representative of a second part of the scene corresponding to the new point of view on the immersive device.

Operations 30, 31, 32, 33 and/or 34 may be reiterated for each frame of the large field-of-view content on a frame per frame basis for example.

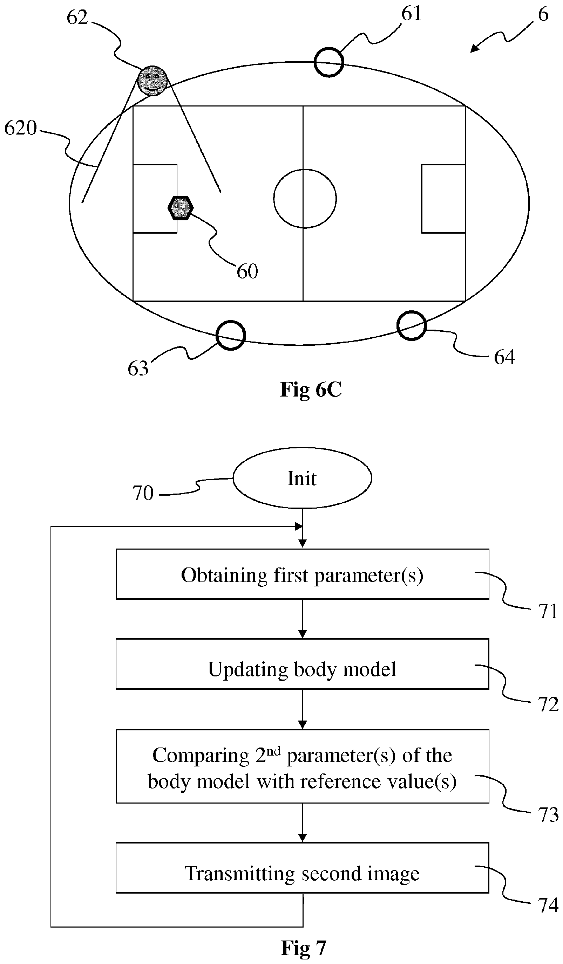

**Figures 6A, 6B** **and** **6C** show a specific implementation of the process of figure 3, according to a non-limiting example of the present principles. In the example of figures 6A to 6C, the scene 6 corresponds to a stadium (for example a soccer stadium or a football stadium). Images of the scene are acquired according to different points of view by a plurality of acquisition devices 61, 62, 63 and 64, e.g. cameras. Each acquisition device 61 to 64 is located at a different position and enables to acquire video contents representative of the scene according to different points of view. At least one of the video contents is a large field-of-view content, for example the video content acquired with the acquisition device 61. The acquisition device 61 is for example an omnidirectional camera that is a camera with a 360-degree field of view in the horizontal plane or with a visual field that covers the entire sphere (4π steradians). According to another example, the acquisition device 61 corresponds to a rig of several camera that enables to acquire the whole sphere or part of it. According to a variant, each video content acquired by the different acquisition devices 61 to 64 is a large field-of-view content, each representing a different part of the scene 6.

**Figure 6A** shows a part 610 of the large field-of-view content displayed on the immersive display device at a given time t. The part 610 corresponds to a part of the large field-of-view content acquired with the acquisition device that is watched at a given time t. The part of the scene 6 represented in the part 610 comprises a ball 60 that may be considered as a point of interest within the large field-of-view content. The part 610 corresponds for example to the field of view of the screen of the immersive display device used by the user to watch the game (e.g. soccer game) acquired with the different acquisition devices 61 to 64.

**Figure 6B** shows a part 611 (of the large field-of-view content acquired with the acquisition device 61) displayed on the immersive display device at a given time t+1 posterior to the time t. The part 611 displayed on the screen of the immersive display device corresponds to the visualization direction 613 that points toward the point of interest (i.e. the ball 60) of the large field-of-view content. Angles ϕ, θ, ψ 614 associated with the visualization direction 613 are defined with regard to a reference direction 612 (having pitch, yaw and roll equal to 0). The body model is updated by applying the measured angle values ϕ, θ, ψ 614 to the body model representing the body (or part of the body) of the user watching the large field-of-view content. A level of comfort associated with the current visualization direction 613 is determined as described in the operation 31 based on the updated body model. It is considered in the non-limiting example of figure 6B and for illustration purpose that the visualization direction 613 is considered as being uncomfortable for the user.

**Figure 6C** shows a part 620 of a content acquired with the acquisition device 62 that is selected to be displayed on the immersive display device used by the user to watch the soccer game of the scene 6. The time of the soccer game at figure 6C is the same as the time at figure 6B and the ball 60 in in the same position with the scene 6 in both figures 6B and 6C. The list of available contents representative of the scene includes the contents acquired with the acquisition devices 61, 62, 63, and 64. Instead of simply reorienting the content of the part 611 around the user, i.e. around the reference direction 612, it may be decided to select another point of view of the scene proposed by the different acquisition devices 62, 63 and 64 different from the point of view proposed by the acquisition device 61. The aim of the selection process is to propose automatically the "best" point of view to the user. The "best" point of view may depend from the content that is displayed on the immersive display device and from user preferences while respecting the comfort aspect associated with the visualization direction. In the example of a soccer game, it may be interesting for the user to be as "close" as possible from the point of interest, i.e. the ball. In each content provided by the acquisition devices, it is first detected by image processing whether the ball appears in the content. Then it is determined within the list of contents having a representation of the ball which content proposes the best point of view to see the ball. To reach that aim, the distance between the acquisition device and the ball may be determined, based on the size of the ball (that is known and for example retrieved from a server or the cloud) and the intrinsic and extrinsic parameters of the acquisition devices (that are also known and for example retrieved from a database stored on a server). The selected content may be the one acquired with the acquisition device corresponding to the camera the closest from the ball with an orientation placing the ball at the center of the image, which corresponds to the acquisition device 62 in the example of figure 6C. To avoid that the user remains in the uncomfortable position corresponding to the previous visualization direction, the point of view associated with the new content provided by the acquisition device 62 is rotated by - ϕ, - θ, and - ψ so the user will naturally go to the point of interest (i.e. the ball 60) and also to a comfortable position (i.e. with pitch, yaw and roll angle equal to 0). To smooth the transition between the different points of view proposed to the user, various visual effects may be applied such as a slow rotation of the sphere onto which the video content is mapped.

According to a variant, the selection of the "best" point of view may be also based on the movement direction of the point of interest (i.e. the ball 60) within the scene to anticipate the future movements that the user will do to follow the displacement of the point of interest.

**Figure 4** diagrammatically shows a hardware embodiment of an immersive display device 4 configured for displaying a large field-of-view video content, the content of which varying at least in part according to the position of the immersive display device 4. The immersive display device 4 corresponds for example to a HMD. The immersive display device 4 comprises at least one inertial sensor 41, at least one display unit (for example a LCD (Liquid Crystal Display), OLED (Organic Light-Emitting Diode) or LCOS (Liquid Crystal On Silicon)) 42 and a transmission unit 43. The inertial sensor 41 corresponds for example to a gyroscope and the immersive display device 4 comprises for example three gyroscopes, one for the pitch, one for the roll and one for yaw. According to another example, the inertial sensor 41 corresponds to an IMU (Inertial Measurement Unit). A controller may be associated with the inertial sensor, the controller being configured to process the data representative of change of position of the device acquired by the inertial sensor and to transmit this data to the transmission unit 43 via a first bus. The transmission unit 43 is for example a wireless interface and is configured to transmit the data received from the inertial sensor 41 to an external device (not shown) via a wireless link (for example according to Wi-Fi or Bluetooth). The external device is for example a Set-Top Box (STB), a computer or any device adapted to store and/or compose and/or decode video content(s). The transmission may be further configured to receive data, via the wireless link, representative of the image(s) 10 of the video content to be displayed on the display unit(s) 42, for example from the external device. The data representative of the image(s) 10 to be displayed are then transmitted to the display unit(s) 42 via a second bus. According to a variant, the transmission unit is an interface configured to transmit/receive data via a wired link, for example according to USB or HDMI standard. The external device may transmit to the HMD the part of the video content corresponding to the measured position of the HMD. The part of the video content corresponding to the measured position of the HMD is for example determined with a specific function establishing the relationship between the point of view associated with the HMD in the real world and the point of view of a virtual camera associated with the video content. Controlling the parts of the video content to be displayed on the display screen(s) of the immersive display device according to the measured position of the immersive display device enables a user wearing the immersive display device to browse into the video content, especially when the video content is larger than the field of view associated with the display screen(s) of the immersive display device. For example, if the field of view offered by the immersive display device, i.e. a HMD, is equal to 110°(for example about the yaw axis) and if the vi deo content offers a content of 180°, the user wearing the HMD may rotate his/he r head to the right or to the left to see the parts of the video content outside the field of view offered by the HMD.

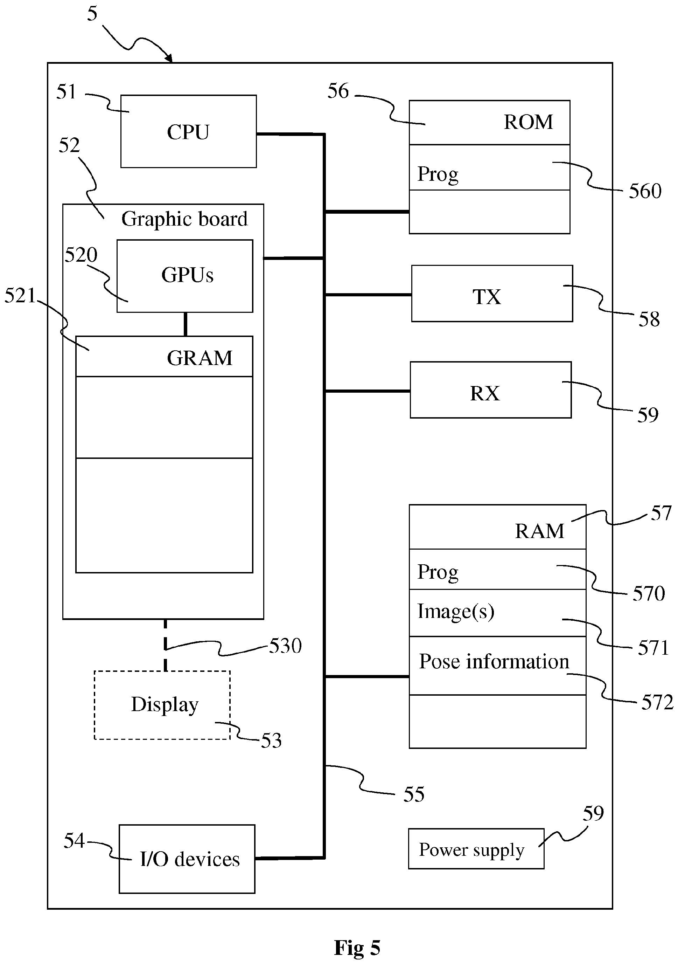

**Figure 5** diagrammatically shows a hardware embodiment of an apparatus 5 configured for compositing and/or transmitting an image. The apparatus 5 is also configured for the creation of display signals of one or several images. The apparatus 5 corresponds for example to a tablet, a Smartphone, a games console, a computer, a laptop or a Set-top box and/or may be a component of the immersive display device 4.

The apparatus 5 comprises the following elements, connected to each other by a bus 55 of addresses and data that also transports a clock signal:
- a microprocessor 51 (or CPU),
- a graphics card 52 comprising:
   - several Graphical Processor Units (or GPUs) 520,
   - a Graphical Random Access Memory (GRAM) 521,
- a non-volatile memory of ROM (Read Only Memory) type 56,
- a Random Access Memory or RAM 57,
- a transmitter 58 configured to transmit data representative of the images,
- a receiver 59 configured to receive data from the immersive display device (e.g. information representative of a visualization direction), from acquisition device(s), data representative of images;
- one or several I/O (Input/Output) devices 54 such as for example a tactile interface, a mouse, a webcam, etc. and
- a power source 59.

The apparatus 5 may also comprise one or more display devices 53 of display screen type directly connected to the graphics card 52 to display images calculated in the graphics card, for example live. The use of a dedicated bus to connect the display device 53 to the graphics card 52 offers the advantage of having much greater data transmission bitrates and thus reducing the latency time for the displaying of images composed by the graphics card. According to a variant, a display device is external to the apparatus 5 and is connected to the apparatus 5 by a cable or wirelessly for transmitting the display signals. The apparatus 5, for example the graphics card 52, comprises an interface for transmission or connection (not shown in figure 5) adapted to transmit a display signal to an external display means such as for example the first display device (e.g. an HMD), a LCD or plasma screen or a video-projector.

It is noted that the word "register" used in the description of memories 521, 56, and 57 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 51 loads and executes the instructions of the program contained in the RAM 57.

The random access memory 57 notably comprises:
- in a register 570, the operating program of the microprocessor 51 responsible for switching on the apparatus 5,
- data 571 representative of image(s) (for example RGB data),
- information 572 representative of the position (and/or of the pose) of the immersive display device.

The algorithms implementing the steps of the method(s) specific to the present disclosure (e.g. the method of transmitting a first image and/or the method of compositing the first image) are stored in the memory GRAM 521 of the graphics card 52 associated with the apparatus 5 implementing these steps. When switched on and once the data 571 and the information 572 are loaded into the RAM 57, the graphic processors 520 of the graphics card 52 load these parameters into the GRAM 521 and execute the instructions of these algorithms in the form of microprograms of "shader" type using HLSL (High Level Shader Language) language or GLSL (OpenGL Shading Language) for example.

The random access memory GRAM 521 notably comprises:
- in a register, data representative of the images;
- in a register, data representative of the position or pose information.

According to another variant, a part of the RAM 57 is assigned by the CPU 51 for storage of the identifiers and the distances if the memory storage space available in GRAM 521 is insufficient. This variant however causes greater latency time in the composition of an image comprising a representation of the environment composed from microprograms contained in the GPUs as the data must be transmitted from the graphics card to the random access memory 57 passing by the bus 55 for which the transmission capacities are generally inferior to those available in the graphics card for transmission of data from the GPUs to the GRAM and vice-versa.

According to another variant, the power supply 58 is external to the apparatus 5.

In an alternate embodiment, the apparatus 5 does not include any ROM but only RAM, the algorithms implementing the steps of the method specific to the present disclosure and described with regard to figure 2 or 3 being stored in the RAM. According to another variant, the apparatus 5 comprises a SSD (Solid-State Drive) memory instead of the ROM and/or the RAM.

**Figure 7** shows a method for transmitting data representative of an image, according to a particular embodiments of the present principles.

In a step 70, the different parameters of the apparatus 5 are updated. In particular, the first and second parameters are initialised in any way.

In a step 71, one or more first parameters representative of a visualisation direction associated with a first image representative of a first part of a scene are obtained, the first image corresponding to a first part of a large field-of-view content. The first parameters are for example obtained from an immersive display device 4 used by a user to watch the first image and browse within the large field-of-view content. According to another example, the first parameters are received from a storage device to be processed.

In a step 72, a body model used to represent the body or part of the body of the user is updated by applying the obtained first parameters to the elements forming the body model.

In a step 73, second parameters representative of the updated body model (e.g. angles associated with joints of the body model and/or constraints associated with the joints and/or with mass-spring-damper systems representing muscles) are compared with one or more reference values to determine a first level of comfort associated with the visualization direction of the first image. The one or more reference values correspond for example to limit values associated with elements forming the body model from which a muscular tension and/or constraints on joints of the body may be felt as uncomfortable.

In a step 74, data representative of a second image is obtained (e.g., generated or received from a memory) and transmitted (e.g. to the immersive display device 4 or to a memory of the apparatus 5) when the first level of visualisation comfort is less than a determined level, the second image being representative of a second part of the scene, the second part of the scene being different from the first part of the scene. When the first level of visualisation comfort is greater than or equal to the determined level, then the first image may be still displayed on the screen of the immersive display device 4, also depending on the viewing direction chosen by the user.

The second image may for example correspond to a second part of the same large field-of-view content that comprises the first part corresponding to the first image, the second part of the large field-of-view video content being different from the first part of the large field-of-view video content. According to a variant, the second image is obtained from a video content different from the first large field-of-view content from which is obtained the first image. The large field-of-view content may be for example obtained from a first acquisition device having a first location in the scene while the video content is obtained from a second acquisition device having a second location in the scene that is different from the first location. The video content may be for example selected from a plurality of video contents, the selection being made according to the position of a point of interest in the scene, and/or according to a level of visualisation comfort associated with each video content.

According to an optional variant, the duration during which a same visualisation direction is held by the user is used to determine the level of visualisation comfort in addition to the second parameters updated via the first parameters. For example, a position may be considered as uncomfortable if a constraint is not respected only after a determined period of time, e.g. after 2, 3, 5 or 10 seconds.

According to another optional variant, a second level of visualisation comfort is determined for the visualisation direction associated with the second image. The determination of this second level of visualization comfort is advantageously performed before transmitting the data representative of the second image, the data being transmitted only when the second level of visualisation comfort is greater than the determined level.

According to a further variant, the second image is rendered and/or displayed on one or more screens of the immersive display device.

Naturally, the present disclosure is not limited to the embodiments previously described.

In particular, the present disclosure is not limited to a method and device for transmitting data representative of an image but also extends to a method for determining the level of comfort associated with the visualisation of a part of a large field-of-view content, and to any device implementing this method and notably any devices comprising at least one CPU and/or at least one GPU.

The present disclosure also relates to a method (and a device configured) for obtaining/generating images having a level of comfort greater than the determined level.

The present disclosure also relates to a method (and a device configured) for displaying images having a level of comfort greater than the determined level.

The present disclosure also relates to a method (and a device configured) for receiving the data representative of an image.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of transmitting data representative of an image, the method comprising:
- obtaining (71) a first parameter representative of a visualisation direction (110) associated with a first image representative of a first part (12) of a scene, said first image corresponding to a first part of a large field-of-view content (10);
- updating (72) a body model (20, 21) by applying said first parameter to said body model (20, 21);
- comparing (73) at least a second parameter of said updated body model to at least a reference value to determine a first level of visualisation comfort; and
- transmitting (74) data representative of a second image when said first level of visualisation comfort is less than a determined level, said second image being representative of a second part of the scene, said second part of the scene being different from said first part (12) of the scene.

2. The method according to claim 1, wherein said second image corresponds to a second part of said large field-of-view content (10), the second part of the large field-of-view content (10) being different from the first part of the large field-of-view content (10).

3. The method according to claim 1, wherein the second image is obtained from a video content different from said first large field-of-view content (10).

4. The method according to claim 3, wherein the large field-of-view content (10) is obtained from a first acquisition device (61) having a first location in said scene, the video content is obtained from a second acquisition device (62) having a second location in said scene, the first location and the second location being different.

5. The method according to claim 3 or 4, wherein said video content is selected from a plurality of video contents, the selection being made according to at least one of the following information:
- position of a point of interest in said scene;
- a level of visualisation comfort associated with each video content.

6. The method according to one of claims 1 to 5, further comprising determining a second level of visualisation comfort for a visualisation direction associated with said second image before transmitting the data representative of said second image, the data being transmitted when said second level of visualisation comfort is greater than said determined level.

7. The method according to one of claims 1 to 6, further comprising displaying said second image.

8. A device configured to transmit data representative of an image, the device comprising a memory (57, 521) associated with at least one processor (51, 520) configured to:
- obtain a first parameter representative of a visualisation direction associated with a first image representative of a first part of a scene, said first image corresponding to a first part of a large field-of-view content;
- update a body model by applying said first parameter to said body model;
- compare at least a second parameter of said updated body model to at least a reference value to determine a first level of visualisation comfort; and
- transmit data representative of a second image when said first level of visualisation comfort is less than a determined level, said second image being representative of a second part of the scene, said second part of the scene being different from said first part of the scene.

9. The device according to claim 8, wherein said second image corresponds to a second part of said large field-of-view content, the second part of the large field-of-view content being different from the first part of the large field-of-view content.

10. The device according to claim 8, wherein the second image is obtained from a video content different from said first large field-of-view content.

11. The device according to claim 10, wherein the large field-of-view content is obtained from a first acquisition device having a first location in said scene, the video content is obtained from a second acquisition device having a second location in said scene, the first location and the second location being different.

12. The device according to claim 10 or 11, wherein said at least one processor is further configured to select said video content from a plurality of video contents responsive to at least one of the following information:
- position of a point of interest in said scene;
- a level of visualisation comfort associated with each video content.

13. The device according to one of claims 8 to 12, wherein the at least one processor is further configured to determine a second level of visualisation comfort for a visualisation direction associated with said second image, the data being transmitted when said second level of visualisation comfort is greater than said determined level.

14. The device according to one of claims 8 to 13, further comprising a screen adapted to display said second image.

15. A processor readable medium having stored therein instructions for causing a processor to perform at least the steps of the method according to one of claims 1 to 7.
